# EUROPÄISCHE PATENTSCHRIFT

(11) **EP 3 658 896 B1**
(45) Veröffentlichungstag und Bekanntmachung des Hinweises auf die Patenterteilung: **28.09.2022**
(21) Anmeldenummer: 18752673.6
(22) Anmeldetag: 26.07.2018
(51) Int. Cl.: G01N 21/35, G01N 21/3577, G01N 21/45, G01N 21/17

(54) **VERFAHREN ZUR SPEKTROSKOPISCHEN BZW. SPEKTROMETRISCHEN UNTERSUCHUNG EINER PROBE UND INTERFEROMETRISCHE VORRICHTUNG**
METHOD FOR SPECTROSCOPICALLY OR SPECTROMETRICALLY EXAMINING A SAMPLE, AND INTERFEROMETRIC DEVICE
PROCÉDÉ D'EXAMEN SPECTROSCOPIQUE ET/OU SPECTROMÉTRIQUE D'UN ÉCHANTILLON ET DISPOSITIF INTERFÉROMÉTRIQUE

(30) Priorität: 26.07.2017 AT 506232017
(43) Veröffentlichungstag der Anmeldung: 03.06.2020
(73) Patentinhaber: Technische Universität Wien, 1040 Wien (AT)
(72) Erfinder: LENDL, Bernhard, 1160 Wien (AT); HAYDEN, Jakob, 1080 Wien (AT); BAUMGARTNER, Bettina, 1080 Wien (AT); KRISTAMENT, Christian, 3751 Sigmundsherberg (AT)
(74) Vertreter: SONN Patentanwälte OG
(86) Internationale Anmeldenummer: PCT/AT2018/060164
(87) Internationale Veröffentlichungsnummer: WO 2019/018870

(56) Entgegenhaltungen:
- EP-A2- 2 738 543
- US-A1- 2004 239 944
- MAZZONI D L ET AL: "TRACE DETECTION OF HYDRAZINES BY OPTICAL HOMODYNE INTERFEROMETRY", APPLIED OPTICS, OPTICAL SOCIETY OF AMERICA, WASHINGTON, DC; US, Bd. 30, Nr. 7, März 1991 (1991-03), Seiten 756-764, XP000175843, ISSN: 0003-6935, DOI: 10.1364/AO.30.000756
- LECHUGA L M ET AL: "Feasibility of evanescent wave interferometer immunosensors for pesticide detection: chemical aspects", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, Bd. 25, Nr. 1-3, April 1995 (1995-04), Seiten 762-765, XP026903938, ISSN: 0925-4005, DOI: 10.1016/0925-4005(95)85169-0 [gefunden am 1995-04-01]

## Beschreibung

Die Erfindung betrifft ein Verfahren zur spektroskopischen bzw. spektrometrischen Untersuchung einer Probe vorzugsweise im infraroten Spektralbereich.

Weiters betrifft die Erfindung eine interferometrische Vorrichtung zur spektroskopischen Untersuchung einer flüssigen Probe vorzugsweise im infraroten Spektralbereich, aufweisend:
- einen durchstimmbaren Laser zur Aussendung eines Laserstrahls vorzugsweise im infraroten Spektralbereich,
- ein Strahlaufteilungselement zur Aufteilung des Laserstrahls in einen Messstrahl und einen Referenzstrahl,
- eine Messkammer zur Wechselwirkung zwischen der Probe und dem Messstrahl,
- eine Referenzkammer zur Wechselwirkung zwischen einer Referenz und dem Referenzstrahl,
- ein Strahlvereinigungselement mit einem ersten Ausgang zur interferometrischen Überlagerung des Messstrahls und des Referenzstrahls als erster Ausgangsstrahl und mit einem zweiten Ausgang zur interferometrischen Überlagerung des Messstrahls und des Referenzstrahls als zweiter Ausgangsstrahl, wobei sich der erste Ausgangsstrahl und der zweite Ausgangsstrahl um 180° in der Phase voneinander unterscheiden,
- einen ersten Detektor zur Erfassung des ersten Ausgangsstrahls,
- einen zweiten Detektor zur Erfassung des zweiten Ausgangsstrahls,
- ein Phasenstellglied zur Einstellung einer Phase zwischen dem Messstrahl und dem Referenzstrahl.

Ein solches Interferometer ist insbesondere aus der EP 2 738 543 A2 bekannt. Die Sensitivität dieses Standes der Technik ist allerdings gering und geht für kleine Konzentrationen des Analyten sogar gegen Null. Bei diesem Stand der Technik wird einerseits ein Differenzsignal detektiert, das die destruktive Interferenz des Messstrahls und des Referenzstrahls ist. Weiters wird ein Summensignal aus Mess- und Referenzstrahl gebildet. Das Differenzsignal und Summensignal werden lediglich über eine Division in Relation gebracht, um die Intensität des Lasers zu überprüfen. Weiters benötigt dieser Stand der Technik immer zwei Messungen für jede Wellenlänge, nämlich eine mit und eine ohne Probe, da immer zuerst die Pfadlängen auf die gleiche optische Weglänge eingestellt werden müssen. Darüber hinaus führen Schwankungen in der optischen Weglänge beim Stand der Technik zu einer Beeinträchtigung des Resultats, da dieses abhängig von der eingestellten optischen Weglänge der Pfade ist. Weiters kann mit diesem Stand der Technik kein Spektrum aufgezeichnet werden. Mit dem vorgesehenen Weglängenänderungselement muss und kann nur die optische Weglänge auf den gleichen Wert für beide Pfade eingestellt werden; die eigentliche Messung erfolgt nur bei einer Wellenlänge.

Die US 2004/0239944 A1 zeigt ein Interferometer, bei dem das Licht von zwei optischen Wellenleitern von einem optischen Kombinierer/Teiler kombiniert und wieder aufgeteilt wird und zwei Photodetektoren das jeweilige Interferenzlicht messen. Durch Einstellung der Wellenlänge bzw. der Temperatur kann der Arbeitspunkt angesteuert werden. Der Gegenstand dieses Dokuments dient allerdings nur zur Bestimmung einer Menge bzw. Konzentration an adsorbierter Substanz. Weiters ist auch bei diesem Gegenstand notwendig, dass zwei Messungen, jeweils eine mit und eine ohne Probe, durchgeführt werden. Zur Durchführung dieser Messungen, also zur Bestimmung der Stoffmenge, muss die Wellenlänge verstellt werden; somit eignet sich das Verfahren nicht zur Aufnahme eines Spektrums des Brechungsindexes. Weiters muss dieses System zwei unterschiedlich lange Pfade aufweisen, da ansonsten eine Änderung der Wellenlänge bzw. der Temperatur der beiden Pfade (in diesem Dokument nämlich gleichzeitig) nicht zu einem Phasenschub führen würde. Daher kann dieser Stand der Technik nicht mit dem Interferometer der EP 2 738 543 A2 kombiniert werden, dessen Funktion gerade gleiche optische Pfadlängen voraussetzt.

Die DE 698 17 131 T2 betrifft ein Interferometer, das zum Messen optisch induzierter Veränderungen der optischen Eigenschaften von zu untersuchenden Materialproben, z.B. von zeitlich aufgelösten optischen Nichtlinearitäten, nützlich ist. Der Gegenstand dieses Dokuments eignet sich jedoch nicht dazu, ein Spektrum einer Probe aufzuzeichnen, da ein Laser mit einer bestimmten (d.h. nicht durchstimmbaren) Wellenlänge vorgesehen ist und auch zwingend notwendig ist, um die Ein-/Auskopplung des Probenlasers mittels wellenlängenabhängiger Spiegel durchzuführen. Darüber hinaus ist die Verwendung eines Photodetektors vorgesehen, der genau auf eine Messstrahlwellenlänge anspricht und die zu testende Probe soll für die Messstrahlwellenlänge transparent sein. Weiters wird in diesem Dokument eine Regelschleife lediglich zum Ausgleichen von Drifts durch Vibrationen, thermische Verschiebung, Umweltgeräusche etc. vorgesehen. Die Sensitivität dieses bekannten Verfahrens ist gering, da der Brechungsindex direkt aus den Ausgaben des ersten und des zweiten Lichtleiters bzw. deren Interferenzsignals bestimmt wird.

David L. Mazzoni et al, "Trace detection of hydrazines by optical homodyne interferometry", Appl. Opt. 30, 756-764 (1991), zeigt ein photothermisches Interferometriesystem. L. M. Lechuga et al, "Feasibility of evanescent wave interferometer immunosensors for pesticide detection: chemical aspects", Sensors and Actuators B: Chemical, Volume 25, Issues 1-3, 1995, Seiten 762-765, zeigt einen Wellenleiter-MZI-Immunosensor.

Spektroskopische Untersuchungen im infraroten Spektralbereich (IR) in wässriger Umgebung sind durch die hohe Absorption von Wasser im infraroten Spektralbereich nur sehr eingeschränkt möglich. Jedoch liegen gerade im infraroten Spektralbereich die meisten charakteristischen Absorptionsbanden vieler organischer Gruppen. Um die Nachteile bekannter Spektroskopiemethoden, wie FTIR- Spektroskopie oder ATR-Spektroskopie, zu beheben, schlägt die EP 2 738 543 A2 ein starres Interferometer mit gleichen optischen Weglängen für Mess- und Referenzstrahl vor, welches eine hintergrundfreie optische Messung liefern soll. Hierbei kann das Interferometer auf völlige destruktive Interferenz in Abwesenheit des Analyten in der Messzelle eingestellt werden. Im nächsten Schritt kann der Analyt eingebracht werden, wodurch ein geringes Differenzsignal erhalten wird. Die Spektroskopie im Differenzmessverfahren soll zu einem deutlich besseren Signal- zu Rauschverhältnis im Vergleich zu konventionellen Spektrometern führen. Beim Stand der Technik wird daher durch Ausnutzen der Kohärenz einer abstimmbaren Laserquelle durch destruktive Interferenz eine hintergrundfreie Messung ermöglicht, die die intensive Untergrundabsorption des Wassers mit optischen Mitteln unterdrückt.

Dieser Ansatz wurde auch in dem Abstract "A QCL-based Mach-Zehnder interferometer for chemical sensing", Jakob Hayden et al., im Rahmen der FLAIR 2016 Konferenz vorgestellt.

In der Praxis hat sich gezeigt, dass die Unterdrückung des Untergrundsignals zufriedenstellend funktioniert. Bei einer näheren mathematischen Untersuchung hat sich jedoch herausgestellt, dass die Sensitivität des destruktiv überlagerten Nutzsignals niedrig ist. Für kleine Konzentrationen des Analyten geht die Sensitivität gegen Null. Aus diesem Grund wurden verschiedenste Maßnahmen überlegt, wie die Empfindlichkeit bei dem vorliegenden Messaufbau gesteigert werden kann. Beispielsweise kann die Intensität des Referenzstrahls gegenüber dem Messstrahl erhöht werden, zum Beispiel indem Strahlteiler mit unterschiedlichem Teilungsverhältnis verwendet werden. Alternativ kann die Transmissionsstrecke in der Messzelle im Verhältnis zur Referenzzelle unterschiedlich gewählt werden. Mit diesen Maßnahmen kann zwar die Messgenauigkeit erhöht werden; es besteht jedoch weiterhin Verbesserungsbedarf.

Demnach besteht die Aufgabe der vorliegenden Erfindung darin, die Nachteile des Standes der Technik zu lindern bzw. zu beseitigen. Die Erfindung setzt sich insbesondere zum Ziel, qualitative und quantitative Untersuchungen insbesondere von flüssigen Proben mit hoher Empfindlichkeit durchzuführen.

Diese Aufgabe wird durch ein Verfahren mit den Merkmalen von Anspruch 1 und eine interferometrische Vorrichtung mit den Merkmalen von Anspruch 3 gelöst.

Das erfindungsgemäße Verfahren zur spektroskopischen bzw. spektrometrischen Untersuchung einer Probe im infraroten Spektralbereich weist zumindest die folgenden Schritte auf:
a) Erzeugen eines Laserstrahls mit einem durchstimmbaren Laser mit einer Wellenlänge vorzugsweise im infraroten Spektralbereich,
b) Aufteilen des Laserstrahls in einen Messstrahl und einen Referenzstrahl,
c) Wechselwirkung der Probe mit dem Messstrahl,
d) Wechselwirkung einer Referenz mit dem Referenzstrahl,
e) Interferometrisches Überlagern des Messstrahls und des Referenzstrahls derart, dass ein erster Ausgangsstrahl und ein zweiter Ausgangsstrahl erhalten werden, deren Phasen um 180° gegeneinander verschoben sind,
f) Detektieren des ersten Ausgangsstrahls,
g) Detektieren des zweiten Ausgangsstrahls,
h) Bildung eines Differenzsignals zwischen dem ersten Ausgangsstrahl und dem zweiten Ausgangsstrahl,
i) Regeln des Differenzsignals auf einen vorgegebenen Sollwert durch Einstellen einer Phasendifferenz zwischen dem Messstrahl und dem Referenzstrahl,
j) Bestimmung eines Brechungsindex der Probe aus der Einstellung der Phasendifferenz zwischen dem Messstrahl und dem Referenzstrahl,
k) Wiederholen der Schritte a) bis j) für weitere Wellenlängen des Laserstrahls vorzugsweise im infraroten Spektralbereich zur Erfassung eines Spektrums des Brechungsindex der Probe.

Die interferometrische Vorrichtung der eingangs angeführten Art ist gekennzeichnet durch
- einen Differenzbilder zur Bildung eines Differenzsignals zwischen dem ersten Ausgangsstrahl und dem zweiten Ausgangsstrahl
- eine Regeleinheit, welche dazu eingerichtet ist, das Differenzsignal mittels des Phasenstellglieds auf einen vorgegebenen Sollwert zu regeln und die Wellenlänge des Laserstrahls durchzustimmen, und
- einen Speicher(35), welcher dazu eingerichtet ist,die Stellung des Phasenstellglieds in Abhängigkeit von der Wellenlänge des Laserstrahls zu speichern, um ein Spektrum des Brechungsindex der Probe aus einer Stellung des Phasenstellglieds in Abhängigkeit von der Wellenlänge des Lasers aufzuzeichnen.

Die erfindungsgemäße Ausführung bedeutet daher eine Abkehr vom bekannten Ansatz, das Hintergrundsignal der flüssigen Probe durch Messung des destruktiv überlagerten Signals eliminieren zu wollen. Demgegenüber wird bei der Erfindung ein Differenzsignal aus dem ersten Ausgangsstrahl und dem zweiten Ausgangsstrahl gebildet, wobei der zweite Ausgangsstrahl um 180° in der Phase gegenüber dem ersten Ausgangsstrahl verschoben ist. Das Differenzsignal wird durch Justierung eines Phasenstellglieds für jede Wellenlänge des zu untersuchenden Wellenlängenbereichs zur Erreichung des vorgegebenen Sollwerts geregelt. Bei einer Veränderung der Probe wird (wellenlängenabhängig) eine einander entsprechende Verschiebung der Signale des ersten und zweiten Ausgangsstrahls erzielt, woraus eine Abweichung des Istwerts des Differenzsignals vom Sollwert resultiert. Diese Abweichung wird über das Phasenstellglied ausgeglichen, wobei die Veränderung des Zustands des Phasenstellglieds aufgezeichnet wird. Der eingestellte Phasenschub am Phasenstellglied korreliert mit dem Brechungsindex (bzw. mit der Brechungsindexdifferenz zwischen der Referenz und der flüssigen Probe). Mittels Durchstimmung des Laserstrahls wird ein Spektrum des Brechungsindex erhalten, welcher wiederum von der Konzentration des Analyten in der flüssigen Probe abhängt. Demnach erlaubt die Erfassung des Spektrums des Brechungsindex sowohl qualitative als auch quantitative Untersuchungen der flüssigen Probe. Durch die simultane Erfassung des ersten Ausgangsstrahls und des zweiten Ausgangsstrahls sowie die anschließende Differenzbildung werden auch Intensitätsschwankungen der Laserlichtquelle ausgeglichen, wodurch es zu einer stabileren Messung kommt.

Bevorzugt wird ein Laserstrahl mit einer Wellenlänge von 200 Nanometern (nm) bis 25 Mikrometer (µm) verwendet, um Messungen im ultravioletten Spektralbereich und/oder im sichtbaren Spektralbereich und/oder im Nahinfrarotbereich (NIR) und/oder im mittleren Infrarotbereich (MIR) durchzuführen. Besonders bevorzugt wird das Verfahren im NIR-Bereich mit einer Wellenlänge von 0,75 µm bis 2,5 µm und/oder im MIR-Bereich mit einer Wellenlänge von mehr als im Wesentlichen 2,5 µm durchgeführt.

Bei einer ersten bevorzugten Anwendung besteht die Probe aus einer Matrix und einem Analyten, die Referenz ausschließlich aus der Matrix. Je nach Anwendung ist die Matrix ein insbesondere flüssiges Lösungsmittel, vorzugsweise Wasser.

Bei einer alternativen bevorzugten Ausführung ist die Referenz ein Feststoff.

Der Feststoff kann bevorzugt aus der folgenden Gruppe ausgewählt sein: SiO₂, SiN, YF₃, TiO₂, Al₂O₃, HfO₂, Si, ZnSe, ZnS, CaF₂, MgF₂, BaF₂, GaAs, AgX (eine Mischung aus AgCl und AgBr), C (als Diamant oder DLC "diamond like carbon"), Chalkohalide (wie z.B. Te-Ge-I) sowie chemischen Verbindungen aus einem oder mehreren Chalkogen-Elementen (Sauerstoff, Schwefel, Selen bzw. Tellur) als formale Anionen mit Metallen oder stärker elektropositiven Elementen (Arsen, Germanium, Phosphor, Antimon, Blei, Bor, Aluminium, Gallium, Indium, Titan, Natrium, Cadmium) als formale Kationen (typische Beispiele, welche als IR-Materialien verwendet worden sind: Ge33%As12%Se55%, Ge30%As13%Se32%Te25%, Ge28%Sb12%Se60%, As40%Se60%). Diese Materialien sind vielfach leicht strukturierbar und im interessierenden Spektralbereich im Wesentlichen transparent.

Gemäß einer besonders bevorzugten Ausführungsvariante wird das Differenzsignal zwischen dem ersten Ausgangsstrahl und dem zweiten Ausgangsstrahl auf den Sollwert Null geregelt. Diese Ausführung ist besonders dazu geeignet, die Empfindlichkeit der Messung zu erhöhen. Die Steigerung der Empfindlichkeit ergibt sich aus der Tatsache, dass der Sollwert Null des Differenzsignals einer relativen Phasenlage des am Ausgang der interferometrischen Vorrichtung überlagernden ersten und zweiten Ausgangsstrahls von + 90° beziehungsweise -90° entspricht. Die Phasenlage von 90° bezieht sich auf die überlagernden Strahlen aus dem Proben- und Referenzstrahlengang. Für den ersten Ausgangsstrahl beträgt die Phase zwischen Proben- und Referenzstrahl +90°, für den zweiten Ausgangsstrahl -90°. Die Differenz in der Überlagerung in den beiden Ausgangsstrahlen (welche jeweils aus zwei überlagernden Teilstrahlen bestehen) beträgt also wie stets 180°. Bei dieser relativen Phasenlage ist die Änderung der an den Detektoren gemessenen Intensitäten in Abhängigkeit von der Stellung des Phasenstellglieds maximal, was eine besonders genaue Einstellung des Phasenstellglieds ermöglicht.

Bei einer integrierten Ausführung des Interferometers weist die Vorrichtung einen Eingangslichtwellenleiter für den Laserstrahl, einen Messstrahllichtwellenleiter für den Messstrahl und einen Referenzstrahllichtwellenleiter für den Referenzstrahl auf. Der Eingangs-, Messstrahl- und Referenzstrahllichtwellenleiter sind bevorzugt auf einem Die (d.h. einem Halbleiter-Wafer) angeordnet. Ein Chip mit integriertem Interferometer ist grundsätzlich aus "On-Chip Integrated Mid-Infrared GaAs/AlGaAs Mach-Zehnder Interferometer", Markus Sieger et alt., Analytical Chemistry 2013 85 (6), 3050-3052 bekannt. Im Gegensatz zu dem dort vorgestellten Interferometer weist die hier beschriebene Anordnung ein Phasenstellglied auf, das die relative Phasenlage der Teilstrahlen bei der Überlagerung beeinflusst und so die oben beschriebene Regelung eines Differenzsignals auf einen bestimmten Wert ermöglicht.

Für die erforderliche Wechselwirkung zwischen der Probe und dem Messstrahl einerseits und zwischen der Referenz und dem Referenzstrahl andererseits weist die Messkammer bevorzugt einen ersten Mikrofluidkanal benachbart des Messstrahllichtwellenleiters und/oder die Referenzkammer einen zweiten Mikrofluidkanal benachbart des Referenzstrahllichtwellenleiters auf. Die Wechselwirkung erfolgt hierbei über das evaneszente Feld des Mess- bzw. Referenzstrahls, das exponentiell abfallend aus dem Lichtwellenleiter heraus in das angrenzende Medium, also die Probe oder die Referenz, ragt.

Alternativ zur Verwendung eines Mikrofluidkanals für die Referenzkammer kann der Referenzstrahlwellenleiter auch mit einer Feststoffschicht bedeckt sein. Die Dicke der auf dem Referenzstrahlwellenleiter gebildeten Feststoffschicht ist vorzugsweise größer als die dreifache Eindringtiefe des evaneszenten Feldes, so dass keine Wechselwirkung mit einer Probe stattfinden kann. Der Feststoff der Feststoffschicht weist bevorzugt eine über die Zeit im Wesentlichen konstante Absorption sowie Dispersion auf. Hinsichtlich einer konstruktiv einfachen Ausführung des integrierten Interferometers ist es günstig, wenn das Phasenstellglied ein Heizelement, insbesondere ein Widerstandsheizelement, für den Messstrahllichtwellenleiter bzw. für den Referenzstrahllichtwellenleiter aufweist. Das Heizelement ist in unmittelbarer Nähe vorzugsweise des Messstrahllichtwellenleiters angeordnet. Durch Änderung der Temperatur wird der effektive Brechungsindex des (Messstrahl-)Lichtwellenleiters und damit die Phase des geführten Lichts geändert. Das Heizelement ist mit einer regelbaren Stromquelle verbunden, welche von der Regeleinheit eingestellt wird. Die Stellgröße ist ein Maß für den Brechungsindex der Probe und wird aufgezeichnet, während die Wellenlänge des Lasers durchgestimmt wird und die Regeleinheit das Differenzsignal auf den Sollwert regelt.

Zum Einkoppeln des Laserlichts bzw. zur Überlagerung des Messstrahls und des Referenzstrahls ist es günstig, wenn das Strahlaufteilungselement einen 1×2-Koppler und das Strahlvereinigungselement einen 2x2-Koppler aufweist. Der 2x2-Koppler bringt den Referenzstrahl und den Messstrahl zur Interferenz und lenkt in Abhängigkeit von deren relativer Phasenlage die interferierenden Strahlen eher in den einen oder den anderen Ausgangswellenleiter. Ein solcher Koppler kann beispielsweise ein Multimodeninterferenz-Koppler (MMI-Koppler) sein. In Strahlrichtung gesehen nach dem 2x2-Koppler werden die beiden Ausgangsstrahlen detektiert. Hierfür können ein erster und ein zweiter Ausgangskoppler vorgesehen sein, welche die Strahlen zum ersten bzw. zweiten Detektor lenken.

Bei einer alternativen Ausführung des Interferometers ist die Messkammer als erste Durchflusszelle im Strahlengang des Messstrahls und die Referenzkammer als zweite Durchflusszelle im Strahlengang des Referenzstrahls ausgeführt. Bei dieser Ausführung wird die erste Durchflusszelle vom Messstrahl durchstrahlt. Die zweite Durchflusszelle wird vom Referenzstrahl durchstrahlt.

Bei einer weiteren Ausführungsform ist an Stelle der zweiten Durchflusszelle ein Feststoff-Absorber vorgesehen.

Um einen Phasenschub für die Regelung des Differenzsignals zwischen dem ersten und zweiten Detektor zu erzielen, ist es besonders günstig, wenn das Phasenstellglied einen Spiegel und einen Piezo-Aktor zur Verstellung des Spiegels aufweist.

Bei dieser Ausführung ist es weiters günstig, wenn das Strahlaufteilungselement einen ersten Strahlteiler und das Strahlvereinigungselement einen zweiten Strahlteiler aufweist.

Die Erfindung wird im Folgenden anhand von bevorzugten Ausführungsbeispielen in den Zeichnungen weiter erläutert.
Fig. 1 zeigt eine erste bevorzugte Ausführungsform einer interferometrischen Vorrichtung zur Untersuchung einer flüssigen Probe.
Fig. 2 zeigt schematisch die Signale eines ersten Detektors für einen ersten Ausgangsstrahl und eines zweiten Detektors für einen zweiten Ausgangsstrahl, jeweils in Abhängigkeit von der Stellung eines Phasenstellglieds.
Fig. 3 zeigt schematisch ein Differenzsignal zwischen den Signalen des ersten und zweiten Detektors.
Fig. 4 zeigt schematisch das Spektrum des Brechungsindex (unten) bzw. der Absorption (oben) der Probe.
Fig. 5 zeigt eine interferometrische Vorrichtung gemäß einer zweiten bevorzugten Ausführungsform.

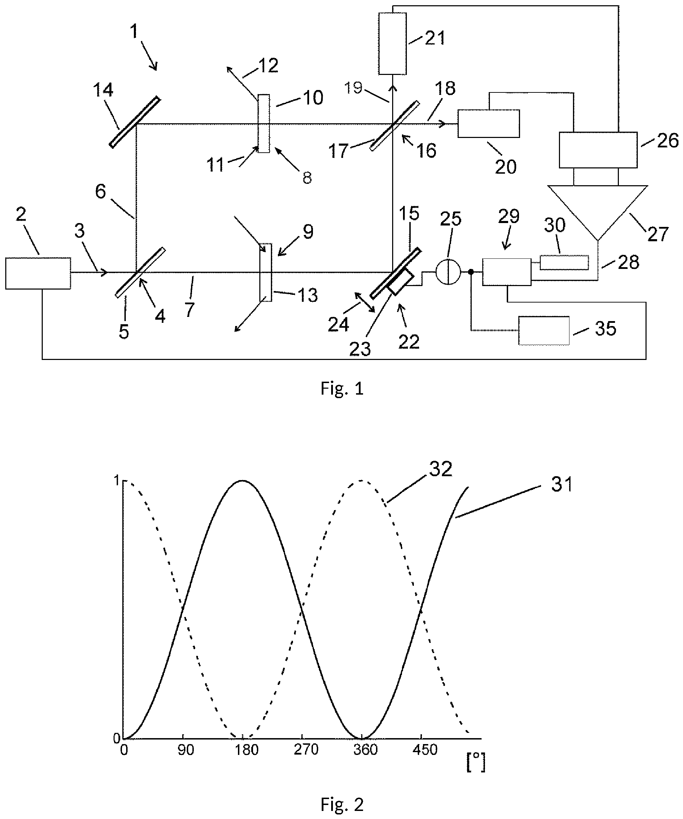

In Fig. 1 ist schematisch eine interferometrische Vorrichtung 1 zur spektroskopischen Untersuchung einer flüssigen Probe im infraroten Spektralbereich gezeigt. Die interferometrische Vorrichtung 1 weist einen durchstimmbaren Laser 2 zur Aussendung eines Laserstrahls 3 im infraroten Spektralbereich auf. Als durchstimmbarer Laser können beispielsweise ein Diodenlaser wie z.B. ein Bleisalzlaser, aber auch ein Halbleiterlaser anderer Bauart wie ein Quantenkaskadenlaser (QCL, "Quantum Cascade Laser") oder ein Interbandkaskadenlaser (ICL, "Interband Cascade Laser) vorgesehen werden. Für die Messungen von Gasen und Flüssigkeiten sind thermisch durchstimmbare DFB QCL ("Distributed Feedback Quantum Cascade Laser") bzw. DFB ICL ("Distributed Feedback Interband Cascade Laser") wegen ihrer Linienschärfe vorteilhaft. Für die Messung von Flüssigkeiten sind jedoch weit durchstimmbare EC QCL ("External Cavity Quantum Cascade Laser") bzw. EC ICL ("External Cavity Intraband Cascade Laser"), aber auch oder mehrerer DFB Laser besonders vorteilhaft. Je nach der messtechnischen Anforderung kann zumindest ein Laser, gegebenenfalls aber auch mehrere Laser zur Anwendung kommen.

In der gezeigten Ausführung weist die interferometrische Vorrichtung 1 ein Mach-Zehnder-Interferometer auf; es können jedoch auch andere Arten von Interferometern, beispielsweise ein Michelson-Interferometer, vorgesehen sein. Die interferometrische Vorrichtung 1 weist ein Strahlaufteilungselement 4, hier ein herkömmlicher Strahlteiler 5, zur Aufteilung des Laserstrahls 3 in einen Messstrahl 6 und einen Referenzstrahl 7 auf. Zudem ist eine Messkammer 8 zur Wechselwirkung zwischen der Probe und dem Messstrahl 6 und eine Referenzkammer 9 zur Wechselwirkung zwischen einer Referenz und dem Referenzstrahl 7 vorgesehen. Die Probe weist einen Analyten auf, der in der gezeigten Ausführungsform in einem anderen Stoff oder Stoffgemisch, der Matrix, enthalten ist; die Referenz besteht aus der Matrix bzw. aus einem geeigneten Feststoff-Absorber. Als Analyten können beispielsweise in Wasser gelöste Stoffe wie Zucker, Proteine, organische Säuren, Alkohole und dergleichen vorgesehen sein. Ebenso gelingt es mit dieser Messtechnik auch in apolaren Lösungsmitteln gelöste Stoffe wie Fettsäuremetyhlester, Mineralölkohlenwasserstoffe und dgl. zu vermessen. Ebenso ist es möglich, Stoffe, die zwar selbst keine Absorption im infraroten Spektralbereich zeigen, aber durch ihre Gegenwart das Spektrum des jeweiligen Lösungsmittels verändern, zu vermessen. Dies ist z.B. der Fall, wenn Ionen in Wasser gelöst vorliegen. Im Fall von Gasen können kleine Moleküle wie NO und dergleichen aber auch größere Moleküle wie VOCs ("volatile organic compounds") in Luft, Atemluft bzw. in Prozessströmen verschiedenster Art analysiert werden.

In der Ausführung der Fig. 1 ist die Messkammer als erste Durchflusszelle 10 im Strahlengang des Messstrahls 6 ausgeführt. Die Probe wird der ersten Durchflusszelle 10 über einen Zufluss 11 zugeführt und nach dem Durchströmen der Durchflusszelle 10 über einen Abfluss 12 abgeführt. Entsprechend ist die Referenzkammer 9 als zweite Durchflusszelle 13 ausgebildet, welche im Strahlengang des Referenzstrahls 7 angeordnet ist. Die zweite Durchflusszelle 13 kann entsprechend der ersten Durchflusszelle 10 ausgebildet sein.

Die interferometrische Vorrichtung 1 weist in der gezeigten Ausführung zudem ein ortsfestes Spiegelelement 14 zur Umlenkung des Messstrahls 6, hier um im Wesentlichen 90°, zwischen dem Strahlteiler 5 und der Messkammer 8 und einen Spiegel 15 zur Umlenkung des Referenzstrahls 7, hier um im Wesentlichen 90°, in Strahlrichtung nach der Referenzkammer 9 auf.

Zudem weist die interferometrische Vorrichtung 1 ein Strahlvereinigungselement 16 zur Überlagerung des Messstrahls 6 und des Referenzstrahls 7 auf. Das Strahlvereinigungselement 16 kann bei dieser Ausführungsvariante wie jenes der EP 2 738 543 ausgeführt sein. In der Ausführung der Fig. 1 ist daher als Strahlvereinigungselement 16 ein weiterer Strahlteiler 17 ausgeführt. Das Strahlvereinigungselement 16 weist einen ersten Ausgang auf, bei dem der Messstrahl 6 und der Referenzstrahl 7 als erster Ausgangsstrahl 18 austreten. An einem zweiten Ausgang des Strahlvereinigungselements 16 treten der Messstrahl 6 und der Referenzstrahl 7 als zweiter Ausgangsstrahl 19 aus, welcher eine Phasenverschiebung von 180° gegenüber dem ersten Ausgangsstrahl aufweist. Zur Erfassung des ersten Ausgangsstrahls 18 ist ein erster (IR-)Detektor 20 vorgesehen. Der konstruktiv überlagerte Ausgangsstrahl 19 wird an einem zweiten (IR-)Detektor 21 erfasst.

Bei einer alternativen Ausführung können das Strahlvereinigungselement 16 und das Strahlaufteilungselement 4 durch ein einheitliches Strahlaufteilungs- und vereinigungselement gebildet sein, beispielsweise bei Verwendung eines Michelson-Interferometers (nicht gezeigt).

Weiters ist ein Phasenstellglied 22 zur Erzielung eines Phasenschubs, d.h. einer Veränderung der Phasendifferenz zwischen dem Messstrahl 6 und dem Referenzstrahl 7, vorgesehen. In der gezeigten Ausführung weist das Phasenstellglied einen Piezo-Aktor 23 zur Verstellung des Spiegels 15 in Pfeilrichtung 24 auf. Hierfür ist der Piezo-Aktor 23 in an sich bekannter Weise mit einer regelbaren Spannungsquelle 25 verbunden.

In der gezeigten Ausführung werden die Signale des ersten Detektors 20 und des zweiten Detektors 21 zunächst einer Einrichtung 26 zur Signalaufbereitung und Demodulation zugeführt. Die verarbeiteten Signale werden an einen Differenzbilder 27 übergeben, mit welchem ein Differenzsignal 28 zwischen dem ersten Ausgangsstrahl 18 und dem zweiten Ausgangsstrahl 16 erzeugt wird. Wenn die an den Detektoren gemessene Intensität eine starke Abhängigkeit von der Wellenlänge des Laserstrahls zeigt, kann das Differenzsignal noch auf diese normiert werden, z.B. durch Normierung der Differenz auf die Summe der Signale. Dadurch kann die Stabilität der Regelung und damit die Empfindlichkeit der Brechungsindexmessung erhöht werden. Das (normierte) Differenzsignal 28 wird als Eingangssignal für eine Regeleinheit 29 herangezogen, mit welcher das Differenzsignal 28 durch Einstellung des Phasenstellglieds 22 auf einen vorgegebenen Sollwert 30 geregelt wird. Demnach wird die Stellung des Phasenstellglieds 22 durch die Regeleinheit 29 für jede Wellenlänge des Lasers 2 im zu untersuchenden IR-Intervall derart verändert, dass der gewünschte Sollwert 30, vorzugsweise Null, erhalten wird. Die Stellung des Phasenstellglieds in Abhängigkeit von der Wellenlänge des Laserstrahls wird in einem Speicher 35 abgelegt, um so ein Spektrum des Brechungsindex der Probe aufzuzeichnen.

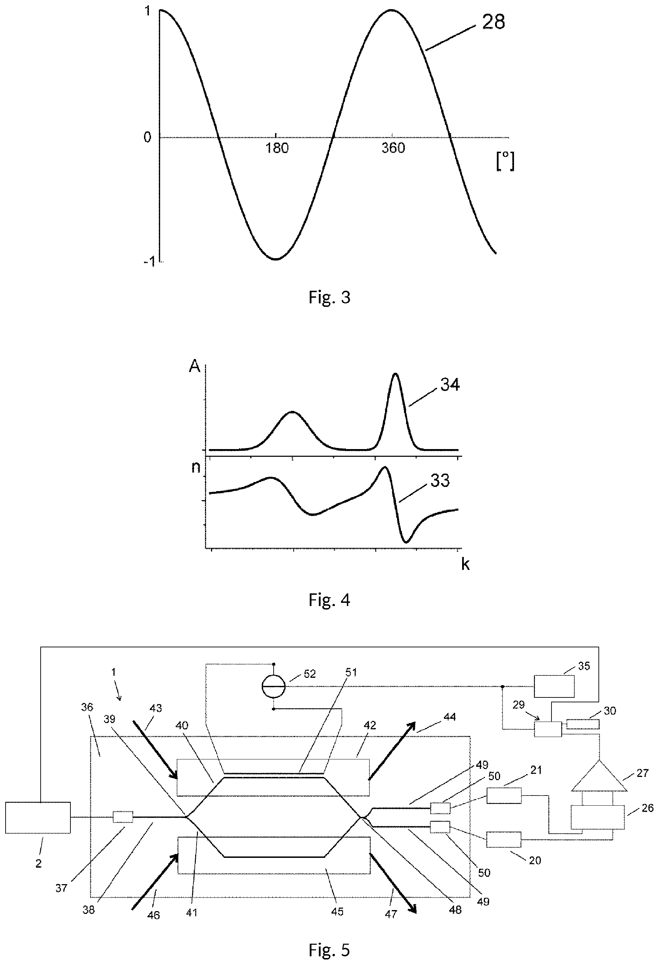

Fig. 2 zeigt einerseits schematisch das (normierte) Signal des ersten Detektors 20 für den ersten Ausgangsstrahl 18 (durchgezogene Linie 31) und andererseits das (normierte) Signal des zweiten Detektors 21 für den zweiten Ausgangsstrahl 19 (gestrichelte Linie 32), jeweils in Abhängigkeit von der Phase (in Grad) des Phasenstellglieds 22 (x-Achse). Demzufolge sind die Signale 31, 32 um 180° gegeneinander verschoben. Gemäß Fig. 2 sind die Signale für den Fall dargestellt, dass die Probe und Referenz ident sind. Durch Einbringung eines Analyten in die Probe werden die Signale 31 und 32 gleichermaßen entlang der x-Achse verschoben. Mit Hilfe der zuvor erläuterten Regeleinheit 29 wird das in Fig. 3 dargestellte Differenzsignal aus dem Signal 31 für den ersten Ausgangsstrahl 18 und dem Signal 32 für den zweiten Ausgangsstrahl 19 auf den Sollwert Null ausgeregelt.

Wie aus Fig. 3 ersichtlich, verschwindet das Differenzsignal 28 bei einer Phase von 90°, wobei die Regeleinheit 29 auf diesen Sollwert eingestellt ist. Darüber hinaus weist das Differenzsignal bei dieser Phase die größte Steigung auf, wodurch durch Messung des Differenzsignals 28 der Wert auf der x-Achse und damit der Brechungsindex mittels beschriebener Regelung mit maximaler Genauigkeit gemessen werden kann.

In Fig. 4 ist schematisch ein Spektrum 33 des Brechungsindex n der Probe in Abhängigkeit von den Wellenzahlen k dargestellt (unten). Der wellenlängenabhängige Brechungsindex ist direkt proportional zu dem Stellsignal für das Phasenstellglied 22, welches beim Durchstimmen des Lasers 2 aufgezeichnet wird. Weiters ist in Fig. 4 ein Spektrum 34 der Absorption A der Probe dargestellt. Das Brechungsindexspektrum 33 des Analyten in der Probe ist mit dem Absorptionsspektrum 34 über die Kramers-Kronig Beziehungen verknüpft. Es zeigt charakteristische Änderungen bei jenen Wellenlängen, bei denen Absorptionsbanden auftreten. Diese Änderungen skalieren, in Lösungen des Analyten in einem Lösungsmittel bzw. einer Matrix (Trägermaterial), mit der Konzentration des Analyten. Die Messung des Brechungsindexspektrums 33 erlaubt daher qualitative und quantitative Bestimmungen. Weiters kann mit der interferometrischen Vorrichtung 1 die Absorption gemessen werden. Die beiden Spektren können in weiterer Folge gemeinsam für die Auswertung herangezogen werden. Beispielsweise kann die Messung wie in der EP 2 738 543 A2 vorgenommen werden (in diesem Fall wäre der Wert des normierten Differenzsignals -1 oder +1) oder indem nach bzw. vor der Brechungsindexmessung analog zu einer gewöhnlichen Transmissionsmessung zunächst der Probenstrahl blockiert wird und dann der Referenzstrahl und jeweils die Summe der Detektorsignale aufgezeichnet werden. Dies wäre eine klassische, nicht interferometrische Absorptionsmessung. Dann wird die Absorption durch Division der beiden Signale und logarithmieren erhalten.

In Fig. 5 ist eine alternative Ausführung der interferometrischen Vorrichtung 1 gezeigt, wobei im Folgenden dieselben Bezugsziffern für (funktions-)gleiche Elemente verwendet werden.

Bei dieser Ausführungsform ist ein Die, nachstehend Chip 36 vorgesehen. Auf dem Chip 36 ist ein Eingangskoppler 37 untergebracht, mit welchem der Laserstrahl des Lasers 2 in einen Eingangslichtwellenleiter 38 eingekoppelt wird. Mittels eines geeigneten 1×2-Kopplers 39 wird der Laserstrahl, bevorzugt zu gleichen Teilen, in einen Messstrahllichtwellenleiter 40 und einen Referenzstrahllichtwellenleiter 41 aufgeteilt. Die Probe wird entlang eines ersten Mikrofluidkanals 42 mit einem Zufluss 43 und einem Abfluss 44 über den Messstrahllichtwellenleiter 40 geleitet. Über das evaneszente Feld wechselwirkt die Probe mit dem Messstrahl, wodurch dessen Ausbreitungsgeschwindigkeit im Messstrahlwellenleiter 40 beeinflusst wird. Der Referenzarm weist einen zweiten Mikrofluidkanal 45, mit einem weiteren Zufluss 46 und einem weiteren Abfluss 47, auf. Bevorzugt sind der Proben- und der Referenzarm identisch ausgeführt. Anschließend werden der Mess- und der Referenzstrahl in einem 2x2 Koppler 48 phasenempfindlich zur Interferenz gebracht und, in Abhängigkeit der Phase zu unterschiedlichen Teilen entsprechend Fig.2, mittels Wellenleitern 49 zu zwei Ausgangskopplern 50 geführt. Am ersten Detektor 20 und am zweiten Detektor 21 wird die Intensität des ausgekoppelten Lichts gemessen. Die Differenz der beiden Detektorsignale wird in der Regeleinheit 29 mit dem Sollwert 30 (hier Null) verglichen. Die Regeleinheit 29 regelt die Stellung des Phasenstellglieds 22, das in einem der beiden (oder beiden) Armen des Interferometers integriert ist. In der Ausführung gemäß Fig. 5 weist das Phasenstellglied 22 ein resistives Heizelement 51 in unmittelbarer Nähe des Messstrahllichtwellenleiters 40 auf. Das Heizelement 51 ist mit einer regelbaren Stromquelle 52 verbunden, welche von der Regeleinheit 29 derart eingestellt wird, dass der erforderliche Phasenschub für die Erzielung des Sollwertes des Differenzsignales erreicht wird.

## Patentansprüche

1. Verfahren zur spektroskopischen bzw. spektrometrischen Untersuchung einer Probe vorzugsweise im infraroten Spektralbereich, mit den Schritten:
a) Erzeugen eines Laserstrahls (3) mit einem durchstimmbaren Laser mit einer Wellenlänge im vorzugsweise infraroten Spektralbereich,
b) Aufteilen des Laserstrahls (3) in einen Messstrahl (6) und einen Referenzstrahl (7),
c) Wechselwirkung der Probe mit dem Messstrahl (6),
d) Wechselwirkung einer Referenz mit dem Referenzstrahl (7),
e) Überlagern des Messstrahls (6) und des Referenzstrahls (7) derart, dass jeweils ein erster Ausgangsstrahl (18) und ein zweiter Ausgangsstrahl (19) erhalten werden, deren Phasen um 180° gegeneinander verschoben sind,
f) Detektieren des ersten Ausgangsstrahls (18),
g) Detektieren des zweiten Ausgangsstrahls (19),
**gekennzeichnet durch**
h) Bildung eines Differenzsignals (28) zwischen dem ersten Ausgangsstrahl (18) und dem zweiten Ausgangsstrahl (19),
i) Regeln des Differenzsignals (28) auf einen vorgegebenen Sollwert (30) durch Einstellen einer Phasendifferenz zwischen dem Messstrahl (6) und dem Referenzstrahl (7),
j) Bestimmung eines Brechungsindex (n) der Probe aus der Einstellung der Phasendifferenz zwischen dem Messstrahl (6) und dem Referenzstrahl (7),
k) Wiederholen der Schritte a) bis j) für weitere Wellenlängen des Laserstrahls (3) vorzugsweise im infraroten Spektralbereich zur Erfassung eines Spektrums des Brechungsindex (n) der Probe.

2. Verfahren nach Anspruch 1, **dadurch gekennzeichnet, dass** das Differenzsignal (28) zwischen dem ersten Ausgangsstrahl (18) und dem zweiten Ausgangsstrahl (19) auf den Sollwert (30) Null geregelt wird.

3. Interferometrische Vorrichtung (1) zur spektroskopischen Untersuchung einer flüssigen Probe vorzugsweise im infraroten Spektralbereich, aufweisend:
- einen durchstimmbaren Laser (2) zur Aussendung eines Laserstrahls (3) vorzugsweise im infraroten Spektralbereich,
- ein Strahlaufteilungselement (4) zur Aufteilung des Laserstrahls in einen Messstrahl (6) und einen Referenzstrahl (7),
- eine Messkammer (8) zur Wechselwirkung zwischen der Probe und dem Messstrahl (6),
- eine Referenzkammer (9) zur Wechselwirkung zwischen einer Referenz und dem Referenzstrahl (7),
- ein Strahlvereinigungselement (16) mit einem ersten Ausgang zur interferometrischen Überlagerung des Messstrahls (6) und des Referenzstrahls (7) als erster Ausgangsstrahl (18) und mit einem zweiten Ausgang zur interferometrischen Überlagerung des Messstrahls (6) und des Referenzstrahls (7) als zweiter Ausgangsstrahl (19),
- einen ersten Detektor (20) zur Erfassung des ersten Ausgangsstrahls (18),
- einen zweiten Detektor (21) zur Erfassung des zweiten Ausgangsstrahls (19),
- ein Phasenstellglied (22) zur Einstellung einer Phase zwischen dem Messstrahl (6) und dem Referenzstrahl (7),
**gekennzeichnet durch**
- einen Differenzbilder (27) zur Bildung eines Differenzsignals (28) zwischen dem ersten Ausgangsstrahl (18) und dem zweiten Ausgangsstrahl (19)
- eine Regeleinheit (29), welche dazu eingerichtet ist, das Differenzsignal (28) mittels des Phasenstellglieds (22) auf einen vorgegebenen Sollwert (30) zu regeln und die Wellenlänge des Laserstrahls (3) durchzustimmen, und
- einen Speicher (35), welcher dazu eingerichtet ist, die Stellung des Phasenstellglieds in Abhängigkeit von der Wellenlänge des Laserstrahls zu speichern, um ein Spektrum des Brechungsindex (n) der Probe aus einer Stellung des Phasenstellglieds (22) in Abhängigkeit von der Wellenlänge des Lasers aufzuzeichnen .

4. Interferometrische Vorrichtung (1) nach Anspruch 3, **dadurch gekennzeichnet, dass** die Vorrichtung einen Eingangslichtwellenleiter (38) für den Laserstrahl (3), einen Messstrahllichtwellenleiter (40) für den Messstrahl (6) und einen Referenzstrahllichtwellenleiter (41) für den Referenzstrahl (7) aufweist.

5. Interferometrische Vorrichtung (1) nach Anspruch 4, **dadurch gekennzeichnet, dass** die Messkammer (8) einen ersten Mikrofluidkanal (42) benachbart des Messstrahllichtwellenleiters (41) und dass die Referenzkammer (9) einen zweiten Mikrofluidkanal (45) benachbart des Referenzstrahllichtwellenleiters (41) aufweist.

6. Interferometrische Vorrichtung (1) nach Anspruch 4 oder 5, **dadurch gekennzeichnet, dass** das Phasenstellglied (22) ein Heizelement (51), insbesondere ein Widerstandsheizelement, für den Messstrahllichtwellenleiter (40) bzw. für den Referenzstrahllichtwellenleiter (41) aufweist.

7. Interferometrische Vorrichtung (1) nach einem der Ansprüche 4 bis 6, **dadurch gekennzeichnet, dass** das Strahlaufteilungselement (4) einen 1×2-Koppler (39) und das Strahlvereinigungselement (16) einen 2x2-Koppler (48) aufweist.

8. Interferometrische Vorrichtung (1) nach Anspruch 3, **dadurch gekennzeichnet, dass** die Messkammer (8) als erste Durchflusszelle (10) im Strahlengang des Messstrahls (6) und die Referenzkammer (9) als zweite Durchflusszelle (13) im Strahlengang des Referenzstrahls (7) ausgeführt ist.

9. Interferometrische Vorrichtung (1) nach Anspruch 8, **dadurch gekennzeichnet, dass** das Phasenstellglied (22) einen Spiegel (15) und einen Piezo-Aktor (23) zur Verstellung des Spiegels (15) aufweist.

10. Interferometrische Vorrichtung (1) nach Anspruch 8 oder 9, **dadurch gekennzeichnet, dass** das Strahlaufteilungselement (4) einen ersten Strahlteiler (5) und das Strahlvereinigungselement (16) einen zweiten Strahlteiler (17) aufweist.

## Claims

1. A method for the spectroscopic or spectrometric analysis of a sample preferably in the infrared spectral range, with the steps:
a) generating a laser beam (3) with a tunable laser with a wavelength in the preferably infrared spectral range,
b) splitting the laser beam (3) into a measurement beam (6) and a reference beam (7),
c) interaction of the sample with the measurement beam (6),
d) interaction of a reference with the reference beam (7),
e) superposing the measurement beam (6) and the reference beam (7) so that a first output beam (18) and a second output beam (19) are respectively obtained, the phases of which are shifted by 180° with respect to one another,
f) detecting the first output beam (18),
g) detecting the second output beam (19),
**characterized by**
h) formation of a differential signal (28) between the first output beam (18) and the second output beam (19),
i) adjusting the differential signal (28) to a predetermined setpoint (30) by setting a phase difference between the measurement beam (6) and the reference beam (7),
j) determination of a refractive index (n) of the sample from the setting of the phase difference between the measurement beam (6) and the reference beam (7),
k) repeating the steps a) to j) for further wavelengths of the laser beam (3) preferably in the infrared spectral range for capturing a spectrum of the refractive index (n) of the sample.

2. The method according to claim 1, **characterized in that** the differential signal (28) between the first output beam (18) and the second output beam (19) is adjusted to the setpoint (30) zero.

3. An interferometric device (1) for the spectroscopic analysis of a liquid sample preferably in the infrared spectral range, comprising:
- a tunable laser (2) for emitting a laser beam (3) preferably in the infrared spectral range,
- a beam-splitting element (4) for splitting the laser beam into a measurement beam (6) and a reference beam (7),
- a measurement chamber (8) for the interaction between the sample and the measurement beam (6),
- a reference chamber (9) for the interaction between a reference and the reference beam (7),
- a beam-combining element (16) with a first output port for the interferometric superposition of the measurement beam (6) and the reference beam (7) as a first output beam (18) and with a second output port for the interferometric superposition of the measurement beam (6) and the reference beam (7) as a second output beam (19),
- a first detector (20) for capturing the first output beam (18),
- a second detector (21) for capturing the second output beam (19),
- a phase-control element (22) for setting a phase between the measurement beam (6) and the reference beam (7),
**characterized by**
- a subtractor (27) for forming a differential signal (28) between the first output beam (18) and the second output beam (19)
- a control unit (29) which is adapted to adjust the differential signal (28) by means of the phase-control element (22) to a predetermined setpoint (30) and to tune the wavelength of the laser beam (3), and
- a memory (35) which is arranged to store the position of the phase actuator depending on the wavelength of the laser beam in order to record a spectrum of the refractive index (n) of the sample from a position of the phase-control element (22) depending on the wavelength of the laser.

4. The interferometric device (1) according to claim 3, **characterized in that** the device comprises an input optical waveguide (38) for the laser beam (3), a measurement-beam optical waveguide (40) for the measurement beam (6) and a reference-beam optical waveguide (41) for the reference beam (7).

5. The interferometric device (1) according to claim 4, **characterized in that** the measurement chamber (8) includes a first microfluidic channel (42) adjacent to the measurement-beam optical waveguide (41) and **in that** the reference chamber (9) includes a second microfluidic channel (45) adjacent to the reference-beam optical waveguide (41).

6. The interferometric device (1) according to claim 4 or 5, **characterized in that** the phase-control element (22) includes a heating element (51), in particular a resistance heating element, for the measurement-beam optical waveguide (40) or for the reference-beam optical waveguide (41).

7. The interferometric device (1) according to one of claims 4 to 6, **characterized in that** the beam-splitting element (4) includes a 1x2 coupler (39) and the beam-combining element (16) includes a 2x2 coupler (48).

8. The interferometric device (1) according to claim 3, **characterized in that** the measurement chamber (8) is configured as a first flow cell (10) in the beam path of the measurement beam (6) and the reference chamber (9) is configured as a second flow cell (13) in the beam path of the reference beam (7).

9. The interferometric device (1) according to claim 8, **characterized in that** the phase-control element (22) comprises a mirror (15) and a piezo actuator (23) for adjusting the mirror (15) .

10. The interferometric device (1) according to claim 8 or 9, **characterized in that** the beam-splitting element (4) comprises a first beam splitter (5) and the beam-combining element (16) comprises a second beam splitter (17).

## Revendications

1. Procédé pour l'examen spectroscopique ou spectrométrique d'un échantillon de préférence dans le domaine spectral infrarouge, avec les étapes:
a) production d'un faisceau laser (3) avec un laser accordable avec une longueur d'onde de préférence dans le domaine spectral infrarouge,
b) division du faisceau laser (3) en un faisceau de mesure (6) et un faisceau de référence (7),
c) interaction de l'échantillon avec le faisceau de mesure (6),
d) interaction d'une référence avec le faisceau de référence (7),
e) superposition du faisceau de mesure (6) et du faisceau de référence (7) de telle manière qu'à chaque fois un premier faisceau de sortie (18) et un deuxième faisceau de sortie (19) sont obtenus, dont les phases sont décalées l'une par rapport à l'autre de 180°,
f) détection du premier faisceau de sortie (18),
g) détection du deuxième faisceau de sortie (19),
**caractérisé par**
h) la formation d'un signal différentiel (28) entre le premier faisceau de sortie (18) et le deuxième faisceau de sortie (19),
i) le réglage du signal différentiel (28) à une valeur de consigne prédéterminée (30) par ajustement d'une différence de phase entre le faisceau de mesure (6) et le faisceau de référence (7),
j) la détermination d'un indice de réfraction (n) de l'échantillon à partir de l'ajustement de la différence de phase entre le faisceau de mesure (6) et le faisceau de référence (7),
k) la répétition des étapes a) à j) pour d'autres longueurs d'onde du faisceau laser (3), de préférence dans le domaine spectral infrarouge pour l'acquisition d'un spectre de l'indice de réfraction (n) de l'échantillon.

2. Procédé selon la revendication 1, **caractérisé en ce que** le signal différentiel (28) entre le premier faisceau de sortie (18) et le deuxième faisceau de sortie (19) est réglé à la valeur de consigne (30) zéro.

3. Dispositif interférométrique (1) pour l'examen spectroscopique d'un échantillon liquide de préférence dans le domaine spectral infrarouge, comportant:
- un laser accordable (2) pour l'émission d'un faisceau laser (3) de préférence dans le domaine spectral infrarouge,
- un élément de division de faisceau (4) pour la division du faisceau laser en un faisceau de mesure (6) et un faisceau de référence (7),
- une chambre de mesure (8) pour l'interaction entre l'échantillon et le faisceau de mesure (6),
- une chambre de référence (9) pour l'interaction entre une référence et le faisceau de référence (7),
- un élément de jonction de faisceaux (16) avec une première sortie pour la superposition interférométrique du faisceau de mesure (6) et du faisceau de référence (7) comme premier faisceau de sortie (18) et avec une deuxième sortie pour la superposition interférométrique du faisceau de mesure (6) et du faisceau de référence (7) comme deuxième faisceau de sortie (19),
- un premier détecteur (20) pour l'acquisition du premier faisceau de sortie (18),
- un deuxième détecteur (21) pour l'acquisition du deuxième faisceau de sortie (19),
- un organe d'ajustement de phase (22) pour l'ajustement d'une phase entre le faisceau de mesure (6) et le faisceau de référence (7),
**caractérisé par**
un soustracteur (27) pour la formation d'un signal différentiel (28) entre le premier faisceau de sortie (18) et le deuxième faisceau de sortie (19)
- une unité de réglage (29) qui est configurée pour régler le signal différentiel (28) à une valeur de consigne prédéterminée (30) au moyen de l'organe d'ajustement de phase (22) et accorder la longueur d'onde du faisceau laser (3), et
- une mémoire (35) qui est configurée pour mémoriser la position de l'organe d'ajustement de phase en fonction de la longueur d'onde du faisceau laser, pour enregistrer un spectre de l'indice de réfraction (n) de l'échantillon en fonction de la longueur d'onde du laser à partir d'une position de l'organe d'ajustement de phase (22).

4. Dispositif interférométrique (1) selon la revendication 3, **caractérisé en ce que** le dispositif comporte un guide d'ondes optiques d'entrée (38) pour le faisceau laser (3), un guide d'ondes optiques de faisceau de mesure (40) pour le faisceau de mesure (6) et un guide d'ondes optiques de faisceau de référence (41) pour le faisceau de référence (7).

5. Dispositif interférométrique (1) selon la revendication 4, **caractérisé en ce que** la chambre de mesure (8) comporte un premier canal microfluidique (42) adjacent au guide d'ondes optiques de faisceau de mesure (41) et **en ce que** la chambre de référence (9) comporte un deuxième canal microfluidique (45) adjacent au guide d'ondes optiques de faisceau de référence (41).

6. Dispositif interférométrique (1) selon la revendication 4 ou 5, **caractérisé en ce que** l'organe d'ajustement de phase (22) comporte un élément chauffant (51), en particulier un élément chauffant à résistance, pour le guide d'ondes optiques de faisceau de mesure (40) ou pour le guide d'ondes optiques de faisceau de référence (41).

7. Dispositif interférométrique (1) selon l'une des revendications 4 à 6, **caractérisé en ce que** l'élément de division de faisceau (4) comporte un coupleur 1x2 (39) et **en ce que** l'élément de jonction de faisceaux (16) comporte un coupleur 2x2 (48).

8. Dispositif interférométrique (1) selon la revendication 3, **caractérisé en ce que** la chambre de mesure (8) est réalisée comme première cellule d'écoulement (10) dans la trajectoire de faisceau du faisceau de mesure (6) et la chambre de référence (9) comme deuxième cellule d'écoulement (13) dans la trajectoire de faisceau du faisceau de référence (7).

9. Dispositif interférométrique (1) selon la revendication 8, **caractérisé en ce que** l'organe d'ajustement de phase (22) comporte un miroir (15) et un actionneur piézo (23) pour le déplacement du miroir (15).

10. Dispositif interférométrique (1) selon la revendication 8 ou 9, **caractérisé en ce que** l'élément de division de faisceau (4) comporte un premier diviseur de faisceau (5) et l'élément de jonction de faisceaux (16) comporte un deuxième diviseur de faisceau (17).
